# EUROPEAN PATENT APPLICATION

(11) **EP 4 593 324 A1**
(43) Date of publication of application: **30.07.2025**
(21) Application number: 25151139.0
(22) Date of filing: 10.01.2025
(51) Int. Cl.: H04L 9/08

(54) **CRYPTOGRAPHIC SYSTEM AND METHOD FOR DYNAMIC AND AUTOMATED SECURE PRESHARED KEY ROTATION AND DISTRIBUTION**

(30) Priority: 26.01.2024 US 202418424719
(71) Applicant: Nokia Solutions and Networks Oy, 02610 Espoo (FI)
(72) Inventor: CARPINI, Walter, Stittsville, Ontario (CA); CHENARD, Sylvain, Gatineau, Quebec (CA); CHARBONNEAU, Martin, Gatineau, Quebec (CA); MELETIOS, Ian, Murray Hill, New Jersey (US)
(74) Representative: Nokia EPO representatives

(57) **Abstract**

A method and apparatus are provided for automatically distributing pre-shared keys (PSKs) in a secure communication network. A first security association (SA) or secured message (SM) is created between two endpoints based on a first PSK. Then, one or more subsequent PSKs are distributed between the endpoints with secure communication support by the first SA or SM. Based on one of the subsequent PSKs, a second security association is formed between the endpoints. Messages between the endpoints can then be transmitted with secure communication support by the second SA or SM.

## Description

### Technical Field

The subject matter of the present disclosure relates to methods and apparatus for distributing and for rotating cryptographic keys.

### Art Background

In cryptography, a pre-shared key (PSK) is a secret sequence, exemplarily in the form of text, symbols, or a series of bits, that was previously shared between the two parties, using a mutually agreed method of key exchange. The parties in possession of a PSK can use it as a Secure Message key (SMK) for forming secure messages. The parties in possession of a PSK can also use the PSK as a Secure Association key (SAK) for forming a secure association (SA) under which the parties may then securely encrypt and decrypt messages. The parties in possession of a PSK can also use the PSK as a Key Encryption Key (KEK) for secure transmission of other keys. Each party may be a human user or a device, e.g. a data processing device. The act of providing a PSK to a party is often referred to as "distribution" of the PSK to the party. The effect of distributing a PSK to a party is that the party will be in possession of the PSK.

Distributing and rotating PSKs can be a complex and time-consuming process. For example, a method that is conventionally used for distributing PSKs in high-security domains involves the manual entry of a PSK by a cryptographic officer at both endpoints of a secure association.

The interval during which a given PSK is authorized for use is referred to as a "cryptoperiod". Due to the manual nature of distribution, the cryptoperiods of PSKs tend to be persistent rather than ephemeral. For example, the operations for manual distribution may be widely spaced out in time, leading to cryptoperiods that in some cases may be as long as six months or more. However, the more times a given PSK instance is used for communication, or the more persistent the cryptoperiod, the more susceptible the PSK is to man-in-the middle attacks or other kinds of cyberattacks. Conversely, the more ephemeral the cryptoperiod, the less exposure there is to attack.

By contrast, dynamically automating the PSK rotations could render the cryptoperiods ephemeral, therefore lessening exposure to attack, and also reducing the operating costs of a secure communication link.

For that reason, among others, there is a need for a more dynamic and automatic means of secure PSK distribution.

### Summary of the Disclosure

Disclosed here is a dynamic and automated method of securing the distribution of PSKs and, in embodiments, the rotations of PSKs. Our method leverages a one-time-only manual PSK configuration process to bootstrap the system, which is followed by a dynamic and automated cryptographic process.

In embodiments, methods are provided for distributing entire sets of pre-shared keys. This makes it possible to further increase the frequency of key rotations, without incurring a heavy load on the infrastructure (e.g., a communication network) that is used for distributing the PSKs. In these further embodiments, the security of PSK distribution may be strengthened by using two-time-use (TTU) or one-time-use (OTU) key-encryption keys (KEKs) with which to distribute the PSK sets.

In addition to improving security against cryptographic attacks, the disclosed method reduces input-error risk because of its decreased reliance on manual entry. Further, the disclosed method may be valuable in a defense-in-depth strategy that combines multiple layers of security. That is, a layered approach that combines scalable based-PSK as described here with scalable Public key Infrastructure (PKI) based-Post Quantum Cryptography (PQC) can potentially enhance security and provide a level of future-proofing against emerging quantum threats.

In the present disclosure, the term "endpoint" refers to a device that is capable of communicating with another device securely using a PSK. The term is motivated by the fact that two devices in communication with each other constitute endpoints of a communication link between the two devices. The communication link may be provided by a communication network. The communication network may provide wired or wireless communication, or both wired and wireless communication. The endpoints may be nodes of the communication network, or they may reside at nodes of the network, or may be connected to or integrated in nodes of the network.

Accordingly, the disclosure relates, in a first aspect, to a method in which a first security association (SA) or secured message (SM) is created based on a first pre-shared key (PSK) between a first endpoint and a second endpoint. With secure communication support by the first SA or SM, one or more subsequent PSKs are distributed from the first endpoint to the second endpoint. A second SA or SM is formed between the first endpoint and the second endpoint based on a second PSK, which is one of the subsequent PSKs. The second SA or SM provides secure communication support for transmitting or receiving at least one message. Distribution of the one or more subsequent PSKs may be fully automated. For example, the one or more subsequent PSKs may be generated automatically and may be transmitted automatically from the first endpoint to the second endpoint over a communication network.

In embodiments, the method comprises, before creating the second SA or SM, validating the second PSK via a validation message transmitted between the first and second endpoints. In more particular embodiments, the validation message contains a string encrypted by the second PSK, and the validation message is transmitted with secure communication support by the first SA or SM.

In embodiments, the distribution of the one or more subsequent PSKs comprises distributing a key set comprising two or more subsequent PSKs, and the second PSK is a PSK selected from the key set of subsequent PSKs. More particular embodiments comprise, before creating the second SA or SM, validating the second PSK via a validation message transmitted between the first endpoint and the second endpoint.

In still more particular embodiments, the validation message for the second PSK comprises a string encrypted by the second PSK; and the validation message for the second PSK is transmitted with secure communication support by the first SA or SM.

In embodiments, the first PSK is a two-time-use key that is used in one instance of transmission to distribute the one or more subsequent PSKs, and is further used in one instance of transmission to transmit the validation message for the second PSK.

In embodiments, a third PSK is selected from the key set of subsequent PSKs and is validated via a validation message transmitted between the first and second endpoints with secure communication support by the second SA or SM. The validation message contains a string encrypted by the second PSK. A third SA or SM is created based on the third PSK. In more particular embodiments, the second PSK is a one-time-use key that is used in precisely one instance of transmission to transmit the third-PSK-validation message.

In embodiments, after the second SA or SM is created, there is at least one instance of selecting a further PSK from the key set of subsequent PSKs and creating a further SA or SM based on the selected further PSK. Some embodiments comprise two or more instances of creating a further SA or SM from the key set of subsequent PSKs, wherein each further SA or SM is based on a respective further PSK selected from the key set of subsequent PSKs, and the respective further PSKs are selected from the key set of subsequent PSKs according to a pre-agreed PSK rotation schedule.

In embodiments, each PSK in the key set of subsequent PSKs has a respective index, and at least one of the further PSKs is selected on the basis that its respective index has become the next index in a PSK rotation schedule.

In some embodiments, the PSK rotation schedule resides at a security operations center (SOC), the PSK index that is next in the PSK rotation cycle is identified in a rotation-request message from the SOC, the PSK index that is next is communicated in a rotation-request message from the SOC, the rotation-request message is transmitted from the SOC with secure communication support by a current SA or SM, and the method further comprises replacing the current SA or SM with a new SA or SM based on the PSK having the next index in the PSK rotation cycle.

In some embodiments, a set-refresh threshold is predetermined, and the method further comprises, when the selected PSK index reaches the set-refresh threshold, distributing, from the first endpoint to the second endpoint, a new key set comprising two or more subsequent PSKs. Distributing the new key set may be automatic.

In any of various embodiments, the one or more subsequent PSKs may be one-time pads (OTPs).

According to a second aspect, the disclosure relates to apparatus comprising circuitry configured to generate cryptographic keys for use as pre-shared keys (PSKs), create security associations (SAs) between a first endpoint and a second endpoint in a communication network based on respective PSKs generated by the circuitry, transmit the respective PSKs such that each transmitted PSK is known to both the first endpoint and the second endpoint, and create SAs between the first endpoint and the second endpoint based on transmitted respective PSKs.

For example, a generator circuit may be configured to generate cryptographic keys for use as pre-shared keys (PSKs) in a secure communication system; a connection circuit may be configured to obtain PSKs from the generator circuit and to create security associations (SAs) between first and second endpoints of the secure communication system based on respective PSKs obtained from the generator circuit; and a distribution circuit may be configured to distribute the respective PSKs obtained from the generator circuit such that each distributed PSK is known to both the first and the second endpoints. The connection circuit may be further configured to create SAs between the first and second endpoints based on respective PSKs that have been distributed by the distribution circuit.

In embodiments, keys are distributed collectively in *key sets.* That is, the distribution circuit is configured to distribute key sets in respective single transmissions from the first endpoint to the second endpoint, each key set comprising two or more PSKs. Moreover, the circuitry may be further configured to sequentially rotate from a current PSK in a current key set to a new PSK in the current key set according to a rotation schedule, and further configured to initiate a new SA based on the new PSK. For example, the circuitry may include a scheduling circuit configured for such purposes.

In embodiments, the circuitry may be further configured to signal an index of each new PSK from the first endpoint to the second endpoint on the occurrence of each PSK rotation.

In embodiments, the circuitry may be further configured to initiate distributions of new key sets, each new key set comprising two or more PSKs, according to a refreshment schedule.

In embodiments, the circuitry may be further configured to encrypt the distributed PSKs with one-time-use keys before distributing them.

### Brief Description of the Drawings

FIG. 1 is a timing diagram that illustrates a manual OTU method for establishing a security association (SA) between a near endpoint device and a remote endpoint device in a network for secure communication.
FIG. 2 is a block diagram of a portion of a network for secure communication, in which there are respective SAs between a Secure Operations Center (SOC) and a multiplicity of remote endpoint devices.
FIG. 3 is a timing diagram of a process, in a first embodiment, for automatically distributing a pre-shared key (PSK) according to principles described in the present disclosure.
FIG. 4 is a detail of FIG. 3, showing a process in which a SA based on an automatically distributed PSK is used to distribute a new PSK.
FIG. 5 is a timing diagram of a process, in a second embodiment, for automatically distributing a pre-shared key (PSK) according to principles described in the present disclosure. In the process of FIG. 5, a set of plural keys is automatically distributed under SA based on an initial, manually distributed OTU PSK. In the process of FIG. 5, a TTU key can be used to validate the reception of a new key set from the SOC.
FIG. 6 is a detail of FIG. 5, showing a process for rotating keys from within a distributed key sets.
FIG. 7 is a detail of FIG. 5, showing a process for using a currently established KEK to distribute a new key set.
FIG. 8 is a detail of FIG. 5, showing how the SOC can request a key rotation from within a distributed key set by sending an index to the remote endpoint device. FIG. 8 also shows how the same key that was used to encode a new key set may be used to verify the new key set.
FIG. 9 is a detail of FIG. 5, showing a steady state that the endpoint pair can settle into, after the initial key set has been successfully distributed.
FIG. 10 is a timing diagram of a process, in a third embodiment, for automatically distributing a pre-shared key (PSK) according to principles described in the present disclosure. In the process of FIG. 10, a OTU key can be used to validate the reception of a new key set from the SOC.
FIG. 11 is a detail of FIG. 10, showing further features of the distribution of a key set.
FIG. 12 is a detail of FIG. 10, showing further details of the rotation of keys from within the distributed key set.
FIG. 13 is a detail of FIG. 10, showing a steady state that the endpoint pair can settle into after the initial key set has been successfully distributed.

### Detailed Description

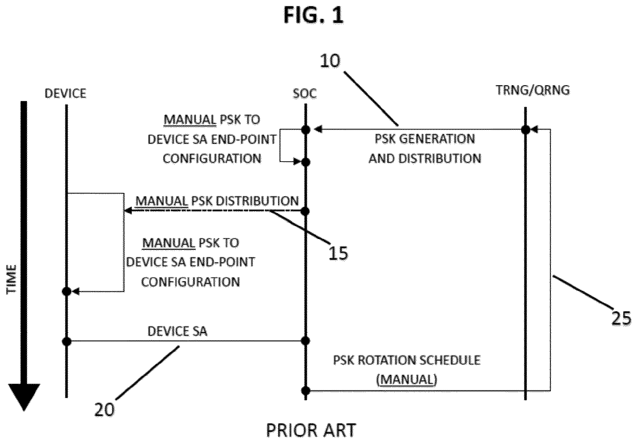

For pedagogical purposes, we will first describe a method of manually refreshing a PSK. We will describe an illustrative scenario in which a SA is established between a near endpoint device and a remote endpoint device, and in which a Secure Operations Center (SOC) is co-located with the near endpoint device. The illustrative scenario is shown graphically in the timing diagram of FIG. 1.

It is important to point out that although the PSKs that are distributed in the following examples are symmetric keys, the principles described in the present disclosure are equally applicable to asymmetric keys. Distribution of both symmetric keys and asymmetric keys should therefore be understood as falling within the scope of the present disclosure.

In the illustrative scenario, the Cryptographic Officer at the SOC causes the random generation **10** of a pre-shared key KEY1 of a specified length, such as a length of 256 bits as described, e.g., in the AES 256 standard. KEY1 is configured or assigned specifically for secure communication with the remote device. The pre-shared key may be generated by, e.g., a random number generator (RNG). A random number generator useful in this regard could be, by way of nonlimiting example, a true random number generator (TRNG) or a quantum random number generator (QRNG), as indicated in FIG. 1. In other examples, it could be a pseudo-random number generator (PRNG).

The Cryptographic Officer then manually loads or programs KEY1 onto the remote device (step **15** in the figure). Since KEY1 is now known at both endpoints, a SA 20 can be established between them, and secure communication can commence under the protection of the pre-shared key, i.e., under KEY1.

The pre-shared key, KEY1, is refreshed according to a PSK rotation schedule **25.**

As those skilled in the art will understand, a pre-shared key (PSK) can be used to encrypt a further key so that the further key can be securely distributed. When used for that purpose, the pre-shared key is often referred to as a Key Encryption Key (KEK). Embodiments of the method disclosed here have applications for distributing KEKs, but the disclosed method is not limited to such applications. By way of non-limiting example, embodiments of the method disclosed here may also be used to distribute pre-shared keys for use as Secure Message Keys (SMKs) or as Secure Association Keys (SAKs). In particular examples, an SMK or SAK may be used as a KEK to encrypt one or more further PSKs for distribution.

The disclosed method, in its various embodiments, leverages an initial, manually entered PSK together with the Secured Message or Secured Association (SM or SA) that it enables, to automate the distribution of subsequent PSKs.

A first embodiment, described below, uses the initial manually entered PSK to distribute a multi-time-use (MTU) key, which we refer to here as a multi-time-use PSK. After creation of the SM or SA via the manual process, the system, i.e., the SOC-device pair, can leverage the multi-time-use PSK to distribute, to the device, a *new* PSK that has been generated under direction from the SOC. When used to encrypt a new key for secure distribution, the multi-time-use PSK is serving as a KEK.

In second and third embodiments, described below, the initial manually entered PSK or a subsequent PSK is used as a key-encryption key to distribute a *set* of new PSKs. The PSK used for that purpose may be limited to a single use. That is, it may be used in the manner of a OTU KEK. Subsequent pre-shared keys can be drawn from this newly distributed set and used, for example, as one-time-use or multi-time-use KEKs on demand or according to a pre-agreed schedule and/or pre-agreed policies. A follow-on distribution of a further set of new PSKs can be accomplished via a one-time-use KEK from the previously distributed PSK set.

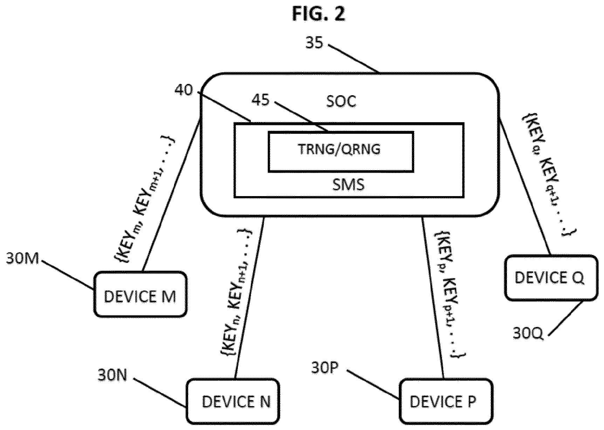

Generally, if the SOC is paired with more than one device, a respective SM or SA and a respective PSK or PSK set will be unique to each SOC-device pairing. Each pairing would have a unique PSK or PSK set that has been securely distributed to each endpoint of the pair. The block diagram of FIG. 2 provides an example in which there are unique associations with four respective devices **30M-30Q,** labeled M, N, P, and Q in the figure. Each message and/or each association has a respective set of PSKs, namely, {KEYₘ, KEYₘ₊₁, . . .},{KEYₙ, KEYₙ₊₁, . . .},{KEYₚ, KEYₚ₊₁, . . .}, and {KEY_{q}, KEY_{q+1}, . . .}. The PSKs in each of the four key sets may be used as KEKs, or they may be used for other purposes.

Turning again to FIG. 2, the SOC block **35** in the figure is shown as including a Security Management Server (SMS) **40.** The SMS may be integrated with the SOC, or it may be connected to it via a secure communications link. The purpose of the SMS is to generate keys and to manage and authenticate keys in support of secure data communications. The SMS may also host the cryptography policies. The various operations performed by the SMS are implemented by digital processing circuitry. Circuitry suitable for such purposes may include, without limitation, special purpose and/or general purpose digital processing circuits individually or in any combination.

Within the SMS block, FIG. 2 also shows a random number generator **45** that may be, e.g., a true random number generator or quantum random number generator.

In a non-limiting example, the operations performed by a SMS may be performed at OSI Layer 1, i.e., at the physical layer, of the secure communications system. More generally, these operations may be performed at any of various OSI layers, and they may be performed at a single OSI layer or at several OSI layers. Arrangements of circuitry for performing the pertinent operations at the physical layer or at any other OSI layer or at any combination of OSI layers should be understood as falling within the scope of the present disclosure.

In the arrangement of FIG. 2, centralized management of cryptographic policy could be practiced, with unique security parameters, including a unique key or key set, for each respective associated pair. Respective key rotation frequencies could be unique to each pair and placed under cyber security policy and control at the SOC.

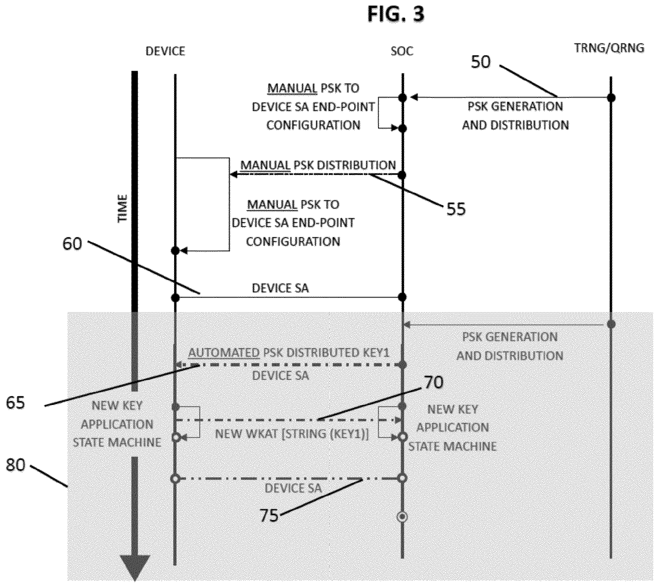

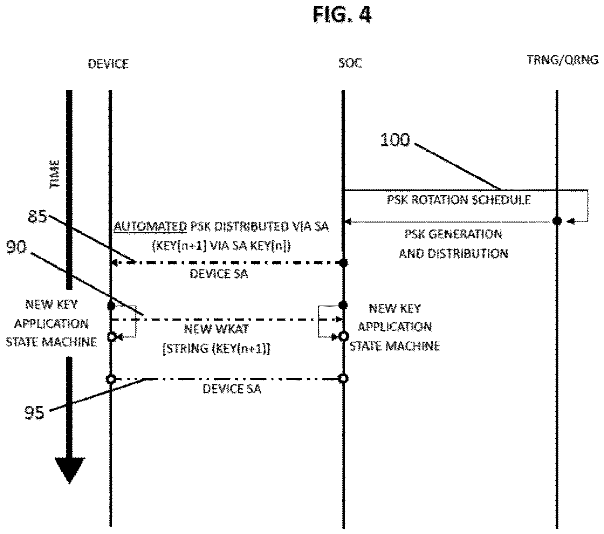

Example 1. FIG. 3 and FIG. 4 illustrate a first embodiment of the disclosed method. As shown in FIG. 3, the initial PSK is generated and configured at the SOC as described above with reference to FIG. 1. The initial PSK distribution **55** is performed manually, and a SA **60** between the remote device and the SOC is created under the manually distributed PSK.

The SA under the manually distributed PSK is then used to automatically distribute **65** a new PSK, labeled as "KEY1" in FIG. 3. After it has been confirmed by, e.g., a well-known answer test (WKAT) **70** that KEY1 has been acquired by both endpoints, KEY1 is used as the basis for a new SA **75** for secure SOC-device communications.

When it becomes desirable to refresh the automatically distributed key, the SA based on the current key, for example KEY1, can be used by the SOC to automatically distribute a new key to be the basis for a new SA. The refreshment process can be repeated multiple times, according to, e.g., a rotation schedule under SOC control.

The automated operations of FIG. 3, as illustrated, are grouped within block **80.**

FIG. 4 provides a detail of FIG. 3, in which a SA **85** based on an automatically distributed PSK denoted as KEY(*n*) is used to distribute a new PSK, denoted in the figure as KEY(*n*+1). After KEY(*n*+1) has been validated by, e.g., WKAT **90,** a new SM or SA **95** can be based on it and used for secure communications.

It will be understood, accordingly, that, KEY1 of FIG. 3 and more generally, the PSKs KEY(*n*+1), KEY(*n*+2), etc. of FIG. 4, can be used as multi-time-use PSKs for subsequent communications between the SOC and the remote device. Such uses in subsequent communications may include utilization as KEKs. As explained above, such communications may include the distribution of new PSKs according, e.g., to a PSK rotation schedule **100.**

In some useful embodiments, the automatically distributed PSKs such as KEY1, KEY2, ..., KEY(*n*), etc. may be implemented as One-Time Pads (OTPs). As is known in the art, an OTP is an encryption key that is only used one time, and that is at least as long as the longest message that it encrypts

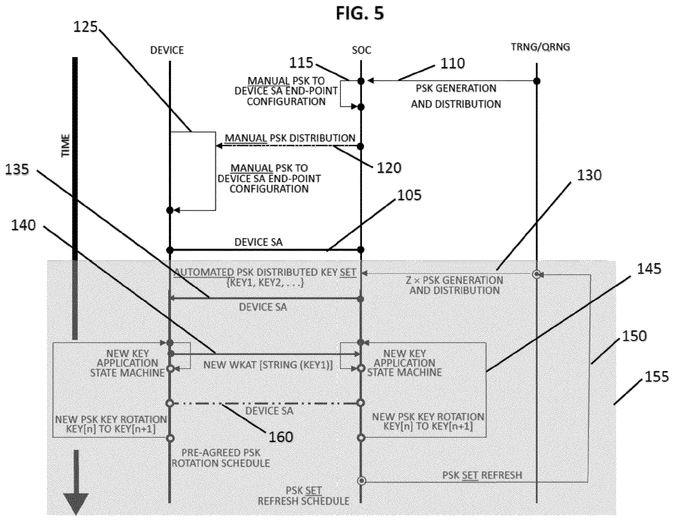

Example 2. FIGS. 5-10 illustrate a second embodiment of the disclosed method. As in Example 1, above, a manually distributed PSK is used to enable secure transmission of subsequent shared keys. In the example of FIGS. 5-10, however, a key *set* comprising Z individual PSKs, wherein Z equals two or more, is created and distributed under the SM or SA based on the initial, manually distributed PSK. The set of Z keys may be created by, e.g., a random number generator.

It is important to note that distributing a key set reduces the specific key usage for key distribution. "Specific usage" refers to the use of a PSK as a key encryption key (KEK) for key distribution, and it means, here, the number of uses of the KEK per distributed key. In the present example, a KEK used to encrypt a subsequent key set is used only *twice*-once for key distribution, and once to confirm key set receipt from the far end.

Turning to FIG. 5, it will be seen that the initial SM or SA **105** is created after a PSK has been generated and distributed **110** to the SOC, configured **115** at the SOC, manually distributed **120** to the remote device, and configured **125** at the remote device by, e.g., the methods that have been discussed above.

As further shown in FIG. 5, the key set {KEY1, KEY2, ...} is generated and distributed **130** to the SOC, and from the SOC, the key set is automatically distributed **135** to the remote device using the SM or SA **105** based on the initial, manually distributed PSK.

After it has been confirmed by, e.g., WKAT **140** that the key set is known at both endpoints, individual keys can be selected for use from the key set. In particular, such a key selection can be made according to a rotation **145** of the keys in the key set. Such key rotations can be made, e.g., according to specified cyber-security operations. Alternatively, a key rotation can be made on demand, in response to a rotation request from the SOC. Example key rotations appear in FIG. 5 as rotations from key KEY(*n*) to key KEY(*n*+1). Key rotations will be described in greater detail below.

It will be understood from the above discussion that in the present disclosure, we use the term "rotation" to refer to the replacement of keys from within a given key set. It should be understood in this regard that entire key sets can also be replaced by distributing a new key set. We use the term *refreshment* to refer to such a replacement of an entire key set. In refreshment, an entire new key set may be generated and distributed to the SOC. The SOC may automatically distribute the new key set to the remote device, exemplarily on demand or as specified by SOC cyber-security policy, which could include, e.g., a schedule **150** for key-set refreshment.

Some embodiments to be described below employ both a rotation cycle and a refreshment cycle. In such embodiments, the rotation cycle may be envisaged as an inner cycle, and the refreshment cycle as an outer cycle that may be incremented, for example, each time an inner cycle is completed.

The currently established key from the current key set can be used as a KEK to securely distribute the next key set. Key-set refreshment will be described in greater detail below. However, it should be noted that some useful applications may treat each of the PSKs in the key set as an OTU KEK that is used once only for key encryption and is then discarded.

As illustrated, block **155** encompasses the automated operations of FIG. 5.

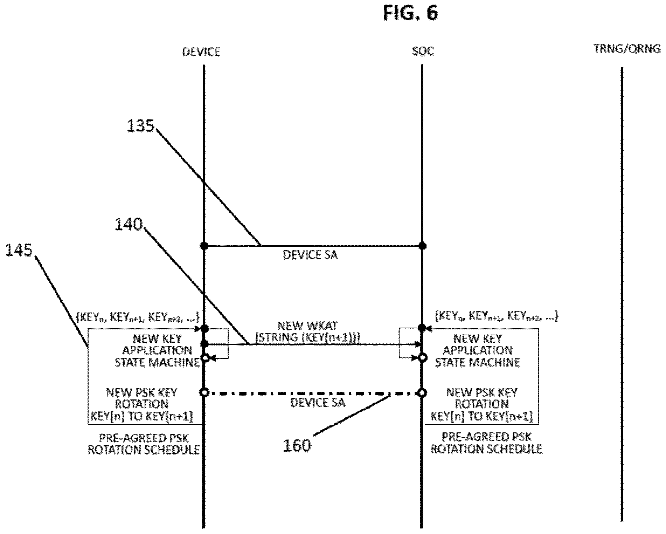

FIG. 6 is a detail of FIG. 5, showing the process for key rotation **145** within the key set {KEY(*n*), KEY(*n*+1), KEY(*n*+2), ...}. As shown in FIG. 6, each of the two endpoints, i.e., the SOC and the remote device, individually performs the key rotation **145,** which is shown in the figure as a rotation from KEY(*n*) to KEY(*n*+1). The rotation may be made, e.g., according to a pre-agreed or a signaled PSK rotation schedule. The remote device and the SOC validate the new key, exemplarily via WKAT **140.** Once the two endpoints have verified that both have acquired the new key, a new SA **160** can be created for secure communications.

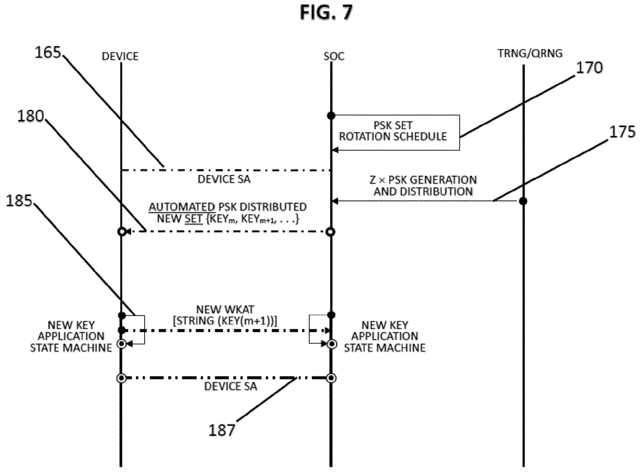

As noted above, a currently established key can be used to securely distribute the next key set. FIG. 7 is a detail of a procedure similar to the procedure of FIG. 5. FIG. 7 shows the use of SA **165,** based on a currently established key, to distribute a new key set {KEY(*m*), KEY(*m*+1), KEY(*m*+2), ...}. A PSK set rotation is requested by the SOC according to a PSK set rotation schedule (pre-agreed or signaled) **170.** In response, a new set of *Z* keys is generated and distributed **175** to the SOC, where the new key set is configured. Under the currently established key, the new key set is automatically distributed **180** to the remote device and validated **185,** and a new SM or SA **187** is established.

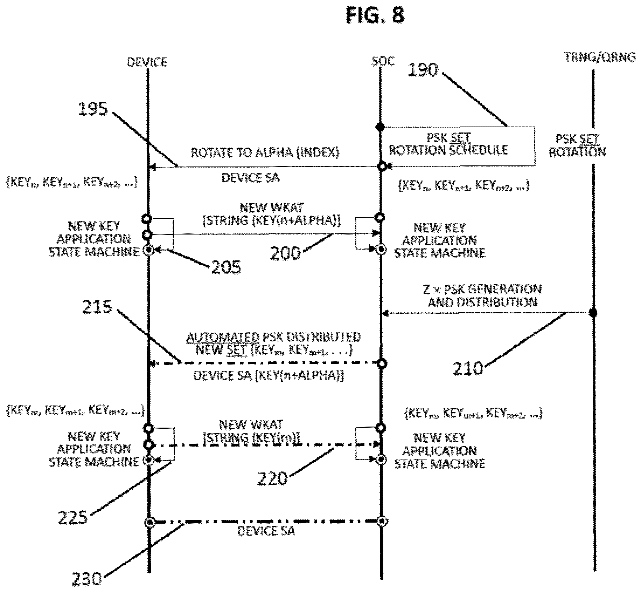

FIG. 8 is a detail of a procedure similar to the procedure of FIG. 5, showing further details of key rotation. As shown in FIG. 8, the SOC can make a rotation request by, e.g., sending an index to the remote device. The SOC obtains the new index from, e.g., a rotation schedule **190** and sends it **195** to the remote device. This is an example scenario in which the rotation is effectuated by signaling, rather than by explicit transmission of a new key.

The index identifies the selected new key by its position in the currently established key set. For example, an index ALPHA is shown as being sent in FIG. 8, and the new position is shown as *n*+ALPHA. Thus, the SOC is able to demand a new key by signaling, without any need to transmit the key itself to the remote endpoint.

As shown in FIG. 8, the new key is verified through, e.g., a WKAT message **200** sent from the remote device to the SOC, and it is established **205** at each endpoint.

FIG. 8 also shows a process for automatically distributing a new key set. It is noteworthy that in the process shown, the same key that was used as a KEK to *encode* the new key set is also used in, e.g., a WKAT, to *verify* the new key set.

More specifically, the new key set is shown in FIG. 8 as the set {KEY(*m*), KEY(*m*+1), KEY(*m*+2), ...}. This key set is generated **210** and distributed to the SOC. It is then distributed **215** to the remote device under the SA based on the key *KEY*(*n+Alpha*), which is used as a KEK to encode the new key set for secure transmission.

The remote device verifies the new key set via a message, exemplarily a WKAT message **220,** sent from the remote device to the SOC under the current SA, i.e., under the SA based on the key KEY(*n+Alpha*)*.* It will be understood, accordingly, that the key KEY(*n+Alpha*) is used *twice:* Once in a message from the SOC to the remote device to communicate the new key set, and once in a message back to the SOC to communicate the WKAT.

It is noteworthy that to verify the new key set, it may be sufficient to verify only one selected key from that set. In FIG. 8, the key KEY(*m*) is used for verification via WKAT **220.**

A selected key from the new key set is established **225** at the endpoints, and a new SA **230** is established under the selected key, which, in the example illustrated, is KEY(*m*).

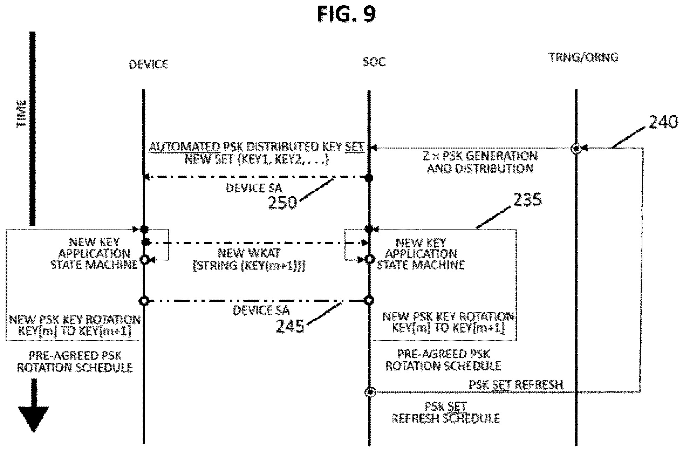

FIG. 9 is a detail of a procedure similar to the procedure of FIG. 5, showing a steady state that the endpoint pair can settle into, after the initial key set has been successfully distributed. In the steady state, an inner rotation cycle **235** and a key set-refresh cycle **240** can be maintained indefinitely. Each of these cycles leads to a respective new SA **245, 250.**

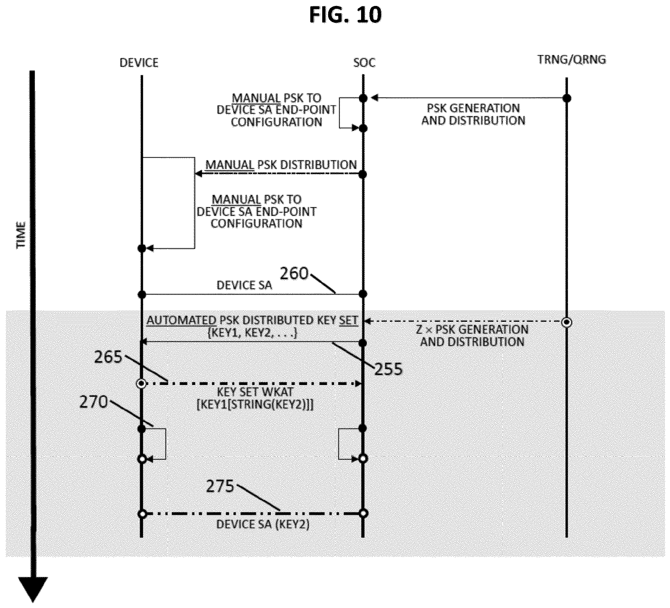

Example 3. As discussed above, a two-time-use KEY, such as *KEY(n+Alpha)* of FIG. 8, can be used to validate the reception of a new key set from the SOC. Alternatively, a one-time-use key can be used for the same purpose. FIGS. 10-13 illustrate an embodiment that uses a one-time-use key for distribution of new key sets. Significantly, such a one-time-use key may, in useful embodiments, be an OTP.

Turning to FIG. 10, it will be seen that as shown there, KEY1 is the first key in a new key set {KEY1, KEY2, . . .} received by the remote device via automated message **255** under SA **260.** KEY1 is used to encrypt the WKAT message **265,** from the remote device, that validates the new key set. It is noteworthy that in the procedure of FIG. 10, KEY1 is used *only once* to encrypt a message for secure transmission.

That is, the WKAT string is encrypted with KEY2, which in this example is the second key from the new key set, to produce *String*(KEY2). KEY1 then encrypts *String*(KEY2) for securely communicating the WKAT response to the SOC.

Thus, KEY1 can serve as a one-time-use key for validating a new key set. Moreover, KEY1 can, in embodiments, be a OTP.

With further reference to FIG. 10, the new key, KEY2, is established **270,** and based on it, the new SA **275** is created.

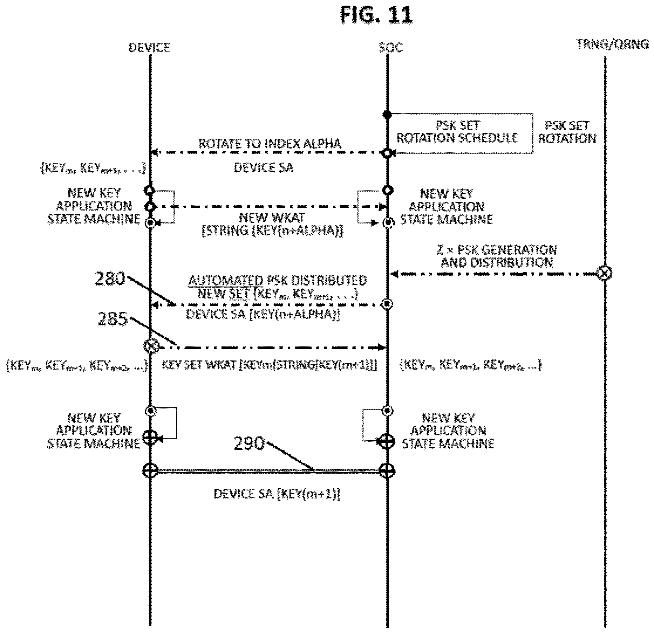

Further details are provided in FIG. 11. As seen in the figure, a unique KEY, shown in the figure as KEY(*n+Alpha*), is used in message **280** to communicate the new key set from the SOC to the remote device. In the embodiment of FIG. 11, the key KEY(*n*+*Alpha*) is a one-time-use key. It is used one time only, solely as a KEK for secure transmission of message **280.**

The remote device acknowledges receipt and understanding of the new key set by using the first key of the new set, represented in the figure as KEY(*m*), for the SA encryption of the WKAT message **285.** The second key of the new set, represented in FIG. 11 as KEY(*m*+1), is used to encode the WKAT response sent within message **285.** New SA **290** is created, based on KEY(*m*+2). As in the example of KEY1, above, KEY(*m*) may be a OTP.

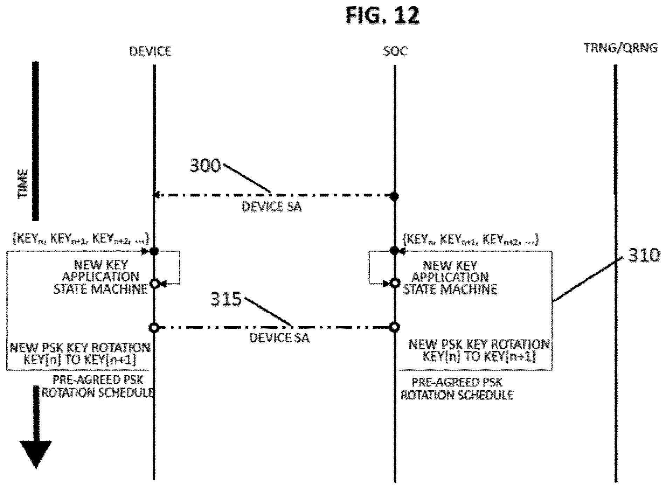

As best seen in FIG. 12, the SOC and the remote device acquire a common set of KEYs to draw from, by using the key-distribution process described above. As shown in the figure, the key set {KEY*n*, KEY(*n*+1), KEY(*n*+2), ...} is acquired under SA **300.** Once the SOC and the remote device have acquired the common set of keys {KEY*n*, KEY(*n*+1), KEY(*n*+2), ...}, key rotation **310** can take place. That is, the SOC and the remote device can rotate keys from the common key set according to, e.g., a pre-agreed rotation schedule. Keys that are selected for use by key rotation may be applied in a multi-time-use manner. However, the key-set distributions are conducted in a one-time-use KEK manner, as explained above.

After key rotation, the new key from the key set {KEY*n*, KEY(*n*+1), KEY(*n*+2), ...} is established, and based on the new key, SA **315** is created.

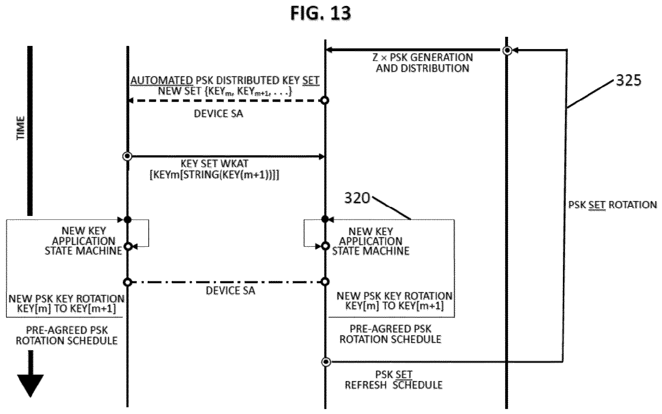

As best seen in FIG. 13, the endpoint pair can settle into a steady state after the initial key set has been successfully distributed. In the steady state, a key-rotation cycle **320** and a set-refresh cycle **325** can be maintained indefinitely.

In operation of a set-refresh cycle, a new key set may be automatically distributed when, e.g., the index of the currently selected PSK in the current key set reaches a predetermined threshold value. In addition, it may be possible to invoke a set-refresh at the discretion of the SOC notwithstanding the set-refresh threshold.

The last key in an established key set can be used as a one-time-use KEK for the purpose of key-set refreshment, i.e., for securely distributing a new set of PSKs. Even if such a "last key" does not meet the definition of a OTP when used for key-set refreshment, it can offer relatively high security if it is used only a single time, and if its cryptoperiod is sufficiently ephemeral.

It should be noted that although a separate WKAT procedure can optionally be performed on each new key obtained by key rotation, it is also possible to rely solely on the WKAT procedure that validated the key set, and thus to minimize traffic between the SOC and the remote device. In the event that the respective endpoints lose synchronization and a failure mode is entered, a system recovery may be implemented by re-starting the key set-distribution procedure.

It should also be noted that the key rotations may be performed at any desired rate, i.e., for any desired cryptoperiod, at the discretion of a policy-setting entity such as the Security Officer. In particular, the cryptoperiod can be made as short as one single use period, implicitly assuring a one-time use, if such a policy is desired and is consistent with the particular implementation.

The procedures carried out by the various embodiments described above are performed by embedded software in digital processing circuits of the SOC and of the remote endpoint device. Data are communicated over a secure association of the hosting data communication network. Such a network may support, by way of example and without limitation, optical fiber communications or microwave communications, among others. Applications and services supported by such a network may include, by way of example and without limitation, data-center interconnection, WAN/LAN interconnection, high-performance computing, wavelength services, or carrier Ethernet services, among others.

Embodiments 1 to 20 defined below are a transcript of claims 1 to 20 of US patent application number 18/424,719 filed on 26 January 2024, the contents of which are incorporated herein by reference.
Embodiment 1. A method, comprising:
   creating a first security association (SA) or secured message (SM) between a first endpoint and a second endpoint based on a first pre-shared key (PSK);
   transmitting one or more subsequent PSKs from the first endpoint to the second endpoint with secure communication support by the first SA or SM;
   creating a second SA between the first endpoint and the second endpoint based on a second PSK, wherein the second PSK is one of the subsequent PSKs; and
   transmitting or receiving at least one message with secure communication support by the second SA or SM.
Embodiment 2. The method of embodiment 1, further comprising:
   before creating the second SA or SM, validating the second PSK via a validation message transmitted between the first and second endpoints.
Embodiment 3. The method of embodiment 2, wherein:
   the validation message contains a string encrypted by the second PSK; and
   the validation message is transmitted with secure communication support by the first SA or SM.
Embodiment 4. The method of embodiment 1, wherein:
   the transmission of the one or more subsequent PSKs comprises transmitting a key set comprising two or more subsequent PSKs; and
   the second PSK is a PSK selected from the key set of subsequent PSKs.
Embodiment 5. The method of embodiment 4, further comprising, before creating the second SA or SM, validating the second PSK via a validation message transmitted between the first endpoint and the second endpoint.
Embodiment 6. The method of embodiment 5, wherein:
   the validation message for the second PSK comprises a string encrypted by the second PSK; and
   the validation message for the second PSK is transmitted with secure communication support by the first SA or SM.
Embodiment 7. The method of embodiment 6, wherein the first PSK is a two-time-use key that is used in one instance of transmission to transmit the one or more subsequent PSKs, and is further used in one instance of transmission to transmit the validation message for the second PSK.
Embodiment 8. The method of embodiment 6, further comprising:
   selecting a third PSK from the key set of subsequent PSKs;
   validating the third PSK via a validation message transmitted between the first and second endpoints with secure communication support by the second SA or SM, wherein said validation message contains a string encrypted by the second PSK; and
   creating a third SA or SM based on the third PSK.
Embodiment 9. The method of embodiment 8, wherein the second PSK is a one-time-use key that is used in precisely one instance of transmission to transmit the third-PSK-validation message.
Embodiment 10. The method of embodiment 4, further comprising, after creating the second SA or SM, at least one instance of selecting a further PSK from the key set of subsequent PSKs and creating a further SA or SM based on the selected further PSK.
Embodiment 11. The method of embodiment 10, comprising two or more instances of creating a further SA or SM from the key set of subsequent PSKs, wherein:
   each further SA or SM is based on a respective further PSK selected from the key set of subsequent PSKs; and
   the respective further PSKs are selected from the key set of subsequent PSKs according to a pre-agreed PSK rotation schedule.
Embodiment 12. The method of embodiment 10, wherein:
   each PSK in the key set of subsequent PSKs has a respective index; and
   at least one of the further PSKs is selected on the basis that its respective index has become the next index in a PSK rotation schedule.
Embodiment 13. The method of embodiment 12, wherein:
   the PSK rotation schedule resides at a security operations center (SOC);
   the PSK index that is next in the PSK rotation cycle is identified in a rotation-request message from the SOC;
   the PSK index that is next is communicated in a rotation-request message from the SOC;
   the rotation-request message is transmitted from the SOC with secure communication support by a current SA or SM; and
   the method further comprises replacing the current SA or SM with a new SA or SM based on the PSK having the next index in the PSK rotation cycle.
Embodiment 14. The method of embodiment 12, wherein:
   a set-refresh threshold is predetermined; and
   the method further comprises, when the selected PSK index reaches the set-refresh threshold, transmitting, from the first endpoint to the second endpoint, a new key set comprising two or more subsequent PSKs.
Embodiment 15. The method of embodiment 1, wherein the one or more subsequent PSKs are one-time pads.
Embodiment 16. An apparatus, comprising circuitry configured to:
   generate cryptographic keys for use as pre-shared keys (PSKs);
   create security associations (SAs) between a first endpoint and a second endpoint in a communication network based on respective PSKs generated by the circuitry;
   transmit the respective PSKs, such that each transmitted PSK is known to both the first endpoint and the second endpoint; and
   create SAs between the first endpoint and the second endpoint based on transmitted respective PSKs.
Embodiment 17. The apparatus of embodiment 16, wherein:
   the circuitry is configured to transmit key sets in respective single transmissions from the first endpoint to the second endpoint, each key set comprising two or more PSKs;
   the circuitry is further configured to sequentially rotate from a current PSK in a current key set to a new PSK in the current key set according to a rotation schedule, and further configured to initiate a new SA based on the new PSK.
Embodiment 18. The apparatus of embodiment 17, wherein the circuitry is further configured to signal an index of each new PSK from the first endpoint to the second endpoint on the occurrence of each PSK rotation.
Embodiment 19. The apparatus of embodiment 17, wherein the circuitry is further configured to initiate transmissions of new key sets, each new key set comprising two or more PSKs, according to a refreshment schedule.
Embodiment 20. The apparatus of embodiment 16, wherein the circuitry is configured to encrypt the PSKs with one-time-use keys before transmitting them.

## Claims

1. A method, comprising:
creating a first security association (SA) or secured message (SM) between a first endpoint and a second endpoint based on a first pre-shared key (PSK);
transmitting one or more subsequent PSKs from the first endpoint to the second endpoint with secure communication support by the first SA or SM;
creating a second SA between the first endpoint and the second endpoint based on a second PSK, wherein the second PSK is one of the subsequent PSKs; and
transmitting or receiving at least one message with secure communication support by the second SA or SM.

2. The method of claim 1, further comprising:
before creating the second SA or SM, validating the second PSK via a validation message transmitted between the first and second endpoints.

3. The method of claim 2, wherein:
the validation message contains a string encrypted by the second PSK; and
the validation message is transmitted with secure communication support by the first SA or SM.

4. The method of claim 1, wherein:
the transmission of the one or more subsequent PSKs comprises transmitting a key set comprising two or more subsequent PSKs; and
the second PSK is a PSK selected from the key set of subsequent PSKs.

5. The method of claim 4, further comprising, before creating the second SA or SM, validating the second PSK via a validation message transmitted between the first endpoint and the second endpoint.

6. The method of claim 5, wherein:
the validation message for the second PSK comprises a string encrypted by the second PSK; and
the validation message for the second PSK is transmitted with secure communication support by the first SA or SM.

7. The method of claim 6, wherein the first PSK is a two-time-use key that is used in one instance of transmission to transmit the one or more subsequent PSKs, and is further used in one instance of transmission to transmit the validation message for the second PSK.

8. The method of claim 6, further comprising:
selecting a third PSK from the key set of subsequent PSKs;
validating the third PSK via a validation message transmitted between the first and second endpoints with secure communication support by the second SA or SM, wherein said validation message contains a string encrypted by the second PSK; and
creating a third SA or SM based on the third PSK.

9. The method of claim 4, further comprising, after creating the second SA or SM, at least one instance of selecting a further PSK from the key set of subsequent PSKs and creating a further SA or SM based on the selected further PSK.

10. The method of claim 9, comprising two or more instances of creating a further SA or SM from the key set of subsequent PSKs, wherein:
each further SA or SM is based on a respective further PSK selected from the key set of subsequent PSKs; and
the respective further PSKs are selected from the key set of subsequent PSKs according to a pre-agreed PSK rotation schedule.

11. The method of claim 9, wherein:
each PSK in the key set of subsequent PSKs has a respective index; and
at least one of the further PSKs is selected on the basis that its respective index has become the next index in a PSK rotation schedule.

12. The method of claim 1, wherein the one or more subsequent PSKs are one-time pads.

13. An apparatus, comprising circuitry configured to:
generate cryptographic keys for use as pre-shared keys (PSKs);
create security associations (SAs) between a first endpoint and a second endpoint in a communication network based on respective PSKs generated by the circuitry;
transmit the respective PSKs, such that each transmitted PSK is known to both the first endpoint and the second endpoint; and
create SAs between the first endpoint and the second endpoint based on transmitted respective PSKs.

14. The apparatus of claim 13, wherein:
the circuitry is configured to transmit key sets in respective single transmissions from the first endpoint to the second endpoint, each key set comprising two or more PSKs;
the circuitry is further configured to sequentially rotate from a current PSK in a current key set to a new PSK in the current key set according to a rotation schedule, and further configured to initiate a new SA based on the new PSK.

15. The apparatus of claim 13, wherein the circuitry is configured to encrypt the PSKs with one-time-use keys before transmitting them.
